# EUROPÄISCHE PATENTSCHRIFT

(11) **EP 1 247 711 B1**
(45) Veröffentlichungstag und Bekanntmachung des Hinweises auf die Patenterteilung: **30.06.2004**
(21) Anmeldenummer: 02007474.6
(22) Anmeldetag: 02.04.2002
(51) Int. Cl.: B60T 8/40, F04B 17/03

(54) **Motor-Pumpen-Aggregat**
Motor pump assembly
Ensemble motopompe

(30) Priorität: 06.04.2001 DE 10117108
(43) Veröffentlichungstag der Anmeldung: 09.10.2002
(73) Patentinhaber: Continental Teves AG & Co. oHG, 60488 Frankfurt (DE)
(72) Erfinder: Dinkel, Dieter, 65824 Schwalbach (DE)
(74) Vertreter: Neumann, Stephan

(56) Entgegenhaltungen:
- WO-A-00/13951
- WO-A-98/10191
- DE-A- 19 632 167
- DE-A- 19 806 077
- US-A- 5 348 382

## Beschreibung

Die vorliegende Erfindung betrifft ein Motor-Pumpen-Aggregat, insbesondere für eine elektronisch geregelte Bremsanlage, gemäß dem Oberbegriff von Patentanspruch 1.

Elektronisch geregelte Bremsanlagen werden beispielsweise in Kraftfahrzeugen eingesetzt, wobei in derartigen Bremsanlagen verschiedene Systeme bzw. Regelungen, wie zum Beispiel Anti-Blockiersysteme (ABS), Antriebsschlupfregelungen (ASR), elektronische Stabilitätsprogramme (ESP) oder elektro-hydraulische Bremsanlagen (EHB), zur Anwendung kommen.

Aus der deutschen Offenlegungsschrift DE 196 32 167 A1 ist ein Motor-Pumpen-Aggregat bekannt, das einen Elektromotor und eine Kolbenpumpe umfaßt. Gemäß dieser Druckschrift sind eine Antriebswelle des Elektromotors und eine Stützachse der Kolbenpumpe separat ausgebildet. Ferner ist auf der Stützachse ein mit einem exzentrischen Zwischenring versehener Exzenter angeordnet, mittels dessen Kolben der Pumpe hin- und herbewegbar sind.

Gemäß der internationalen Patentanmeldung mit der Veröffentlichungsnummer WO 98/10191 ist es bei Aggregaten, die keine derartige Stützachse aufweisen, bekannt, am freien Ende der Antriebswelle des Motors einen exzentrischen Wellenabschnitt vorzusehen, auf dem ein Lager mit einer geschlossenen Lagerschale angeordnet ist. Die um das freie Wellenende herum geschlossene Lagerschale weist einen zur Welle hin gerichteten, abgerundeten Vorsprung auf, um insbesondere bei einer durch den Anlauf des Motors bedingten axialen Verschiebung der Motorwelle, bei der die Lagerschale dann an einer Wand des Pumpengehäuses anliegt, die Reibung zwischen Lagerschale und Welle zu minimieren.

Die gattungsgemäße internationale Patentanmeldung mit der Veröffentlichungsnummer WO 00/13951 offenbart schließlich ein Motor-Pumpen-Aggregat mit einem Elektromotor und einer Kolbenpumpe, wobei Kolben der Pumpe über einen Exzenter antreibbar und die Antriebswelle des Elektromotors sowie eine Stützachse der Kolbenpumpe separat ausgebildet sind. Auf der Stützachse ist unter Zwischenschaltung einer Hülse ein mit einem exzentrischen Zwischenring versehenes Dreiringlager angeordnet, wobei der Zwischenring und damit auch das Dreiringlager ebenfalls mit der Antriebswelle verbunden ist.

Beim Anlauf des Elektromotors kann es zu einer axialen Verschiebung der Antriebswelle in Richtung auf die Stützachse kommen, die die dabei entstehenden Axialkräfte aufnimmt. Insbesondere gemäß Fig. 5 der WO 00/13951 ist zumindest die Stützachse an ihrem zur Antriebswelle hin gerichteten Ende abgerundet ausgebildet, um die bei der Übertragung der Axialkräfte zwischen beiden Bauteilen möglicherweise auftretende Reibung zu minimieren. Diese Minimierung ist unter anderem auch deshalb erforderlich, weil beim Abrieb entstehende Späne die Funktionsfähigkeit der Bremsanlage beeinträchtigen können.

Die Herstellung von derartig abgerundeten Achsen- und/oder Wellenenden ist jedoch sehr aufwendig und deshalb mit hohen Fertigungskosten verbunden. Besonders bei Massenprodukten wie Bremsanlagen müssen aber aufgrund des starken Wettbewerbes die Herstellungskosten stets niedrig gehalten werden.

Es ist deshalb Aufgabe der vorliegenden Erfindung, ein derartiges Motor-Pumpen-Aggregat so weiterzubilden, daß es kostengünstiger herstellbar ist. Vorzugsweise sollen außerdem auch die im Aggregat auftretenden Reibungskräfte so gering wie möglich sein.

Diese Aufgabe wird erfindungsgemäß dadurch gelöst, daß bei einem gattungsgemäßen Motor-Pumpen-Aggregat zusätzlich die zwischen dem exzentrischen Zwischenring und der Stützachse angeordnete Hülse als Mittel zur Übertragung von, beispielsweise beim Anlauf des Elektromotors auftretenden, Axialkräften auf die Stützachse ausgebildet ist. Damit wird in vorteilhafter Weise ein direkter Kontakt zwischen der Antriebswelle und der Stützachse vermieden. Deshalb müssen diese Bauteile auch nicht mehr aufwendig zur Herstellung der aus Gründen der Reibungsminimierung beim Stand der Technik erforderlichen abgerundeten Achsen- und/oder Wellenenden bearbeitet werden, was zu einer Senkung der Herstellungskosten führt.

Gemäß einer bevorzugten Ausführungsform der Erfindung umgreift die Hülse das zur Antriebswelle hin gerichteten Ende der Stützachse zumindest teilweise. Damit wird wirksam verhindert, daß sich die Hülse bei einer axialen Verschiebung der Antriebswelle und somit auch des Zwischenringes und der daran befestigten Hülse entsprechend dem Stand der Technik gemäß Fig. 5 der WO 00/13951 über die Stützachse schieben kann. Hierdurch wird eine vorteilhafte Möglichkeit geschaffen, die Axialkräfte mittels der oder dem die Stützachse umgreifenden Abschnitte bzw. Vorsprung der Hülse auf die Achse zu übertragen.

Vorzugsweise weist die Hülse in der Nähe des zur Antriebswelle hin gerichteten Endes der Stützachse einen geschlossenen Boden auf. Diese Weiterbildung der vorliegenden Erfindung ist besonders einfach, beispielsweise durch Tiefziehen, herzustellen.

Die aus dem Stand der Technik bekannte Hülse wird ebenfalls durch Tiefziehen gefertigt, wobei abschließend der Boden ausgestanzt wird. Da dieser Hülsenboden jedoch vorzugsweise zur Übertragung der beim Anlauf des Motors entstehenden Axialkräfte erhalten bleibt, kann der bisherige zusätzliche Arbeitsvorgang des Ausstanzens entfallen, wodurch die Herstellungskosten wiederum gesenkt werden können.

Zur Minimierung der zwischen Boden und Stützachse auftretenden Reibung ist mit Vorteil am Boden ein Mittel zur Einhaltung eines Abstandes zum Ende der Stützachse vorgesehen. Dabei ist dieses Mittel vorzugsweise als ein zum Ende des Stützachse hin gerichteter zentrischer Vorsprung ausgebildet, der bevorzugt gleichzeitig mit dem Tiefziehen der Hülse in einem Arbeitsgang hergestellt werden kann.

In der nachfolgenden Beschreibung werden weitere Merkmale und Einzelheiten der vorliegenden Erfindung in Zusammenhang mit den beigefügten Zeichnungen anhand eines Ausführungsbeispieles näher erläutert. In den Zeichnungen zeigen:
- Fig. 1: eine Schnittansicht des erfindungsgemäßen Motor-Pumpen-Aggregats, und
- Fig. 2: teilweise im Schnitt eine vergrößerte Ansicht eines für die Erfindung wesentlichen Bereichs von Fig. 1.

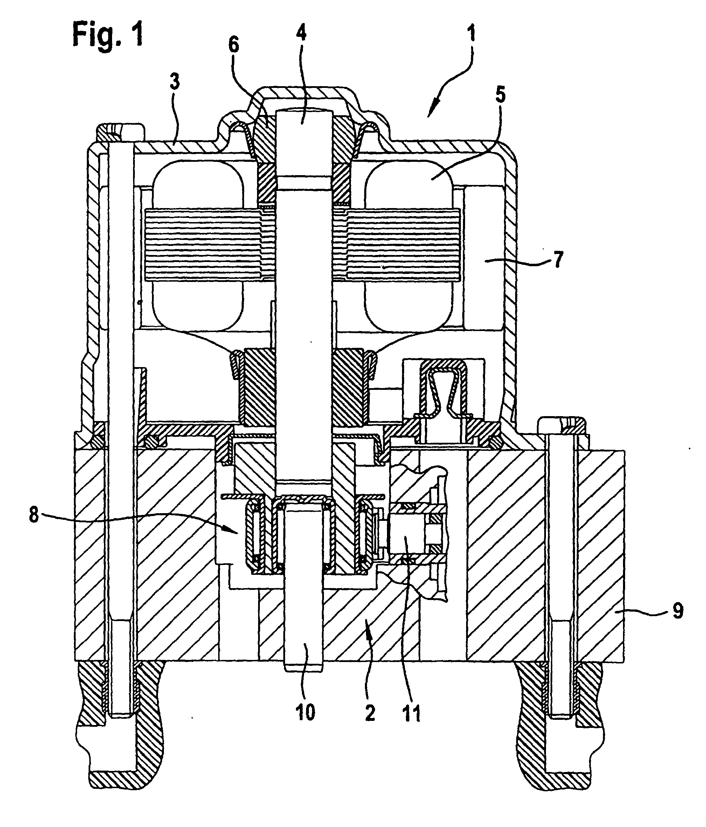

In Fig. 1 ist das erfindungsgemäße Motor-Pumpen-Aggregat teilweise im Längsschnitt dargestellt. Dabei sind ein Elektromotor mit 1 und eine Kolbenpumpe mit 2 bezeichnet. Im Gehäuse 3 des Elektromotors 1 ist eine Antriebswelle 4, auf der ein Rotor 5 angeordnet ist, in einem hier als Gleitlager ausgeführten Lager 6 gegenüber einem Stator 7 drehbar gelagert. Am dem Lager 6 gegenüberliegenden Ende der Antriebswelle 4 ist diese in einem Dreiringlager 8 gelagert, wobei die im Betrieb im Lager 8 auftretenden Kräfte von einer im Pumpengehäuse 9 angeordneten Stützachse 10 aufgenommen werden. Die Drehung der Antriebswelle 4 wird über das insbesondere exzentrisch ausgeführte Dreiringlager 8 in eine Hin- und Herbewegung von hier radial zur Antriebswelle 4 gerichteten Kolben 11 übertragen, die im Gehäuse 9 der Pumpe 2 geführt sind. Hierdurch wird von den Kolben 11 ein beispielsweise für den Betrieb einer elektronisch geregelten Fahrzeugbremse mit ABS (Anti-Blockier-System), ASR (Antriebs-Schlupf-Regelung), ESP (Elektronisches Stabilitäts-Programm) oder EHB (elektro-hydraulische Bremsanlage) erforderlicher Druck aufgebaut.

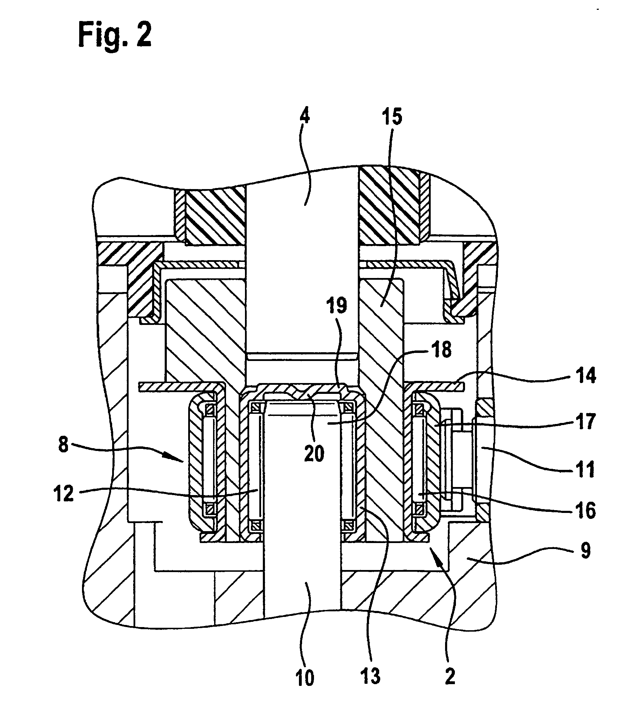

Die vorliegende Erfindung wird in Zusammenhang mit Fig. 2 näher erläutert, die in vergrößerter Darstellung und teilweise im Schnitt den für die Erfindung wesentlichen Bereich von Fig. 1 zeigt. Das Dreiringlager 8 umfaßt vorzugsweise innere Nadeln 12, die zwischen der Stützachse 10 und einer Hülse 13 abrollen, so daß die Hülse 13 und die damit verbundenen Bauteile gegenüber der Stützachse 10 eine Drehbewegung ausführen können. Zwischen der inneren Hülse 13 und einer äußeren Hülse 14 ist ein exzentrischer Zwischenring 15 vorgesehen, mittels dessen aufgrund der Exzentrizität die Drehbewegung der Antriebswelle 4 in eine hin- und hergehende Bewegung der Kolben 11 umgewandelt wird. Dazu sind am Umfang der äußeren Hülse 14 wiederum Nadeln oder Rollen 16 vorgesehen, die von einer Schale 17 umgriffen sind. Die Schale 17 liegt direkt an den Kolben 11 an und dreht sich bevorzugt nicht, sondern führt lediglich die hin- und hergehende Bewegung in radialer Richtung bezüglich der Antriebswelle 4 aus.

Erfindungsgemäß ist zumindest eine der beiden Hülsen 13, 14 als Mittel zur Übertragung von beispielsweise beim Anlauf des Elektromotors 1 auftretenden Axialkräften auf die Stützachse 10 ausgebildet. Bevorzugt und im vorliegenden Ausführungsbeispiel dargestellt ist hierfür die zwischen dem exzentrischen Zwischenring 15 und der Stützachse 10 befindliche Hülse 13 vorgesehen. Es ist jedoch auch möglich, daß die äußere Hülse 14 derart gestaltet ist, daß diese Axialkräfte auf die Stützachse 10 übertragen kann. Die Hülse 14 kann dann entsprechend den folgenden Ausführungen zur Hülse 13 aufgebaut sein.

Durch die Erfindung wird in vorteilhafter Weise ein direkter Kontakt zwischen der Antriebswelle 4 und der Stützachse 10 vermieden, wodurch diese Bauteile an dieser Stelle nicht mehr so aufwendig wie beim Stand der Technik bearbeitet werden müssen. Beispielsweise kann das Ende 18 der Stützachse 10 eine glatte Stirnfläche aufweisen, die insbesondere abgehackt und anschließend durch Trovalisieren geglättet werden kann.
Gemäß einer bevorzugten Ausführungsform der Erfindung umgreift die Hülse 13 das zur Antriebswelle 4 hin gerichteten Ende 18 der Stützachse 10 zumindest teilweise. Damit wird wirksam verhindert, daß sich die Hülse 13 bei einer axialen Verschiebung der Antriebswelle 4 und somit auch des mit dieser vebundenen Zwischenringes 15 und der daran befestigten Hülse 13 über die Stützachse 10 schieben kann. Bei dieser nicht dargestellten Ausführungsform kann es sich um einen oder mehrere Abschnitte oder Vorsprünge der Hülse 13 handeln, die zwischen dem Ende 18 der Stützachse 10 und der Antriebswelle 4 vorgesehen sind.

Bevorzugt weist die Hülse 13 aber in der Nähe des zur Antriebswelle 4 hin gerichteten Endes 18 der Stützachse 10 einen geschlossenen Boden 19 auf, so daß die Hülse 13 das Ende 18 der Stützachse 10 und somit auch die inneren Nadeln 12 vollständig umgreift. Diese Weiterbildung der vorliegenden Erfindung ist besonders einfach, beispielsweise durch Tiefziehen, herzustellen. Ein weiterer Vorteil liegt darin, daß die Laufflächen des oberen Endes 18 der Stützachse 10, die Nadeln 12 und die innenliegenden Flächen der Hülse 13 beim Transport besser geschützt sind und diese Kontaktstelle bereits bei einem Lagerhersteller gefettet bzw. geschmiert werden kann.

Zur Minimierung der zwischen Boden 19 und Stützachse 10 auftretenden Reibung ist mit besonderem Vorteil am Boden 19 ein Mittel zur Einhaltung eines Abstandes vom Boden 19 zum Ende 18 der Stützachse 10 vorgesehen. Dabei ist dieses Mittel vorzugsweise als ein zum Ende 18 des Stützachse 10 hin gerichteter zentrischer Vorsprung 20 ausgebildet, der bevorzugt gleichzeitig mit dem Tiefziehen der Hülse 13 in einem Arbeitsgang hergestellt werden kann.

## Patentansprüche

1. Motor-Pumpen-Aggregat mit einem Elektromotor (1) und mit einer Kolbenpumpe (2), insbesondere für elektronisch geregelte Bremsanlagen von Kraftfahrzeugen, wobei eine Antriebswelle (4) des Elektromotors (1) sowie eine Stützachse (10) der Kolbenpumpe (2) separat ausgebildet sind, und auf der Stützachse (10) ein Dreiringlager (8) angeordnet ist, das einen exzentrischen Zwischenring (15) und zumindest eine Hülse (13) umfaßt, **dadurch gekennzeichnet, daß** die zwischen exzentrischem Zwischenring (15) und Stützachse (10) angeordnete Hülse (13) als Mittel zur Übertragung von Axialkräften auf die Stützachse (10) ausgebildet ist.

2. Motor-Pumpen-Aggregat nach Anspruch 1, **dadurch gekennzeichnet, daß** die Hülse (13) das zur Antriebswelle (4) hin gerichteten Ende (18) der Stützachse (10) zumindest teilweise umgreift.

3. Motor-Pumpen-Aggregat nach Anspruch 1 oder 2, **dadurch gekennzeichnet, daß** die Hülse (13) in der Nähe des Endes (18) der Stützachse (10) einen geschlossenen Boden (19) aufweist.

4. Motor-Pumpen-Aggregat nach Anspruch 3, **dadurch gekennzeichnet, daß** am Boden (19) ein Mittel zur Einhaltung eines Abstandes zum Ende (18) der Stützachse (10) vorgesehen ist.

5. Motor-Pumpen-Aggregat nach Anspruch 4, **dadurch gekennzeichnet, daß** das Mittel als ein zum Ende (18) der Stützachse (10) hin gerichteter zentrischer Vorsprung (20) ausgebildet ist.

## Claims

1. Motor-and-pump assembly including an electric motor (1) and a piston pump (2), in particular for electronically controlled brake systems of motor vehicles, wherein a driving shaft (4) of the electric motor (1) and a supporting shaft (10) of the piston pump (2) have a separate design, and a three-ring bearing (8) is arranged on the supporting shaft (10), comprising an eccentric intermediate ring (15) and at least one sleeve (13),
**characterized in that** the sleeve (13) interposed between the eccentric intermediate ring (15) and the supporting shaft (10) is designed as a means for transmitting axial forces onto the supporting shaft (10).

2. Motor-and-pump assembly as claimed in claim 1,
**characterized in that** the sleeve (13) embraces at least partly the end (18) of the supporting shaft (10) directed to the driving shaft (4).

3. Motor-and-pump assembly as claimed in claim 1 or 2,
**characterized in that** the sleeve (13) includes a closed bottom (19) close to the end (18) of the supporting shaft (10).

4. Motor-and-pump assembly as claimed in claim 3,
**characterized in that** a means for maintaining a distance from the end (18) of the supporting shaft (10) is provided at the bottom (19).

5. Motor-and-pump assembly as claimed in claim 4,
**characterized in that** the means is designed as a centric projection (20) directed to the end (18) of the supporting shaft (10).

## Revendications

1. Agrégat de pompe à moteur comportant un moteur électrique (1) et une pompe à piston (2), particulièrement pour des systèmes de frein d'automobiles commandés électroniquement, un arbre de commande (4) de moteur électrique (1) ainsi qu'un arbre de support (10) de la pompe à piston (2) étant formés séparément et un palier à trois anneaux (8) étant disposé sur l'arbre de support (10), le palier comportant un anneau intermédiaire (15) excentrique et au moins un manchon (13), **caractérisé en ce que** le manchon (13) disposé entre l'anneau intermédiaire (15) et l'arbre de support (10) est formé comme moyen à transmettre de forces axiales à l'arbre de support (10).

2. Agrégat de pompe à moteur selon la revendication 1, **caractérisé en ce que** le manchon (13) enfourne au moins partiellement l'extrémité (18) de l'arbre de support (10) dirigée vers l'arbre de commande (4).

3. Agrégat de pompe à moteur selon les revendications 1 ou 2, **caractérisé en ce que** le manchon (13) prés de l'extrémité (18) de l'arbre de support (10) est prévu d'un fond clos (19).

4. Agrégat de pompe à moteur selon la revendication 3, **caractérisé en ce qu'**un moyen est prévu pour tenir la distance vis à vis l'extrémité (18) de l' arbre de support (10).

5. Agrégat de pompe à moteur selon la revendication 4, **caractérisé en ce que** le moyen est formé comme saillie (20) excentrique dirigée vers l'extrémité (18) de l'arbre de support (10).
